(19)

Europäisches
Patentamt
European
Patent Office
Office européen
des brevets

(11) **EP 3 147 697 A1**

(12) **EUROPEAN PATENT APPLICATION**

(43) Date of publication:
**29.03.2017 Bulletin 2017/13**

(21) Application number: **15186595.3**

(22) Date of filing: **24.09.2015**

(51) Int Cl.:
*G02B 13/12* (2006.01)          *G02B 27/09* (2006.01)
*B23K 26/21* (2014.01)          *B29C 65/16* (2006.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(71) Applicant: **VRIJE UNIVERSITEIT BRUSSEL 1050 Brussel (BE)**

(72) Inventors:
• DÜRR, Fabian
  76139 Karlsruhe (DE)
• THIENPONT, Hugo
  1755 Gooik (BE)

(74) Representative: **DenK iP
Hundelgemsesteenweg 1116
9820 Merelbeke (BE)**

(54) **OPTICAL ZOOM SYSTEM**

(57) The present invention relates to an optical system comprising a zoom lens system with at least two lenses and means for moving said at least two lenses with respect to one another in a given direction so that a plurality of energy or irradiance distributions of the received light can be generated, whereby at least one of said lenses has at least one freeform shaped optical surface.

(a) 1x

Lens movement

(b) 2x

(c) 3x

**Fig. 1**

**Description**

**Field of the invention**

The present invention is generally related to the field of optical zoom systems.

**Background of the invention**

Some applications for industrial materials processing with lasers come along with a variety of different requirements on the delivered beam irradiance distribution. With a high spatial uniformity, flat-top beams provide benefits for applications like surface heat treatment or welding, in which it is desirable to uniformly illuminate a target surface. Other applications, like drilling and photo-polymerization, can benefit from different beam profiles such as Bessel or annular beams. The complexity of how to reach these imposed requirements is further increased due to the number of different commercially available laser sources, ranging from tens of Watt to tens of kWatt. Certain applications can additionally benefit from time-varying distributions. For example, a dynamic beam shaping system has been developed based on scanning mirror optics for laser beam hardening, proving a variable scan width, whereby the energy spread is adaptable to different local heat flow conditions. The use of deformable mirrors and spatial light modulators has been also proposed to achieve adaptive laser beam irradiance control. Even though adaptive concepts are very versatile, their optical efficiency might be significantly reduced and the used adaptive optics might tolerate only limited energy densities. A very common approach is the design of dynamic laser beam systems based on movable lenses. Zoom beam expanders are a well-known example and widely commercially available, e.g. for applications where the exactly required expansion ratio is unknown.

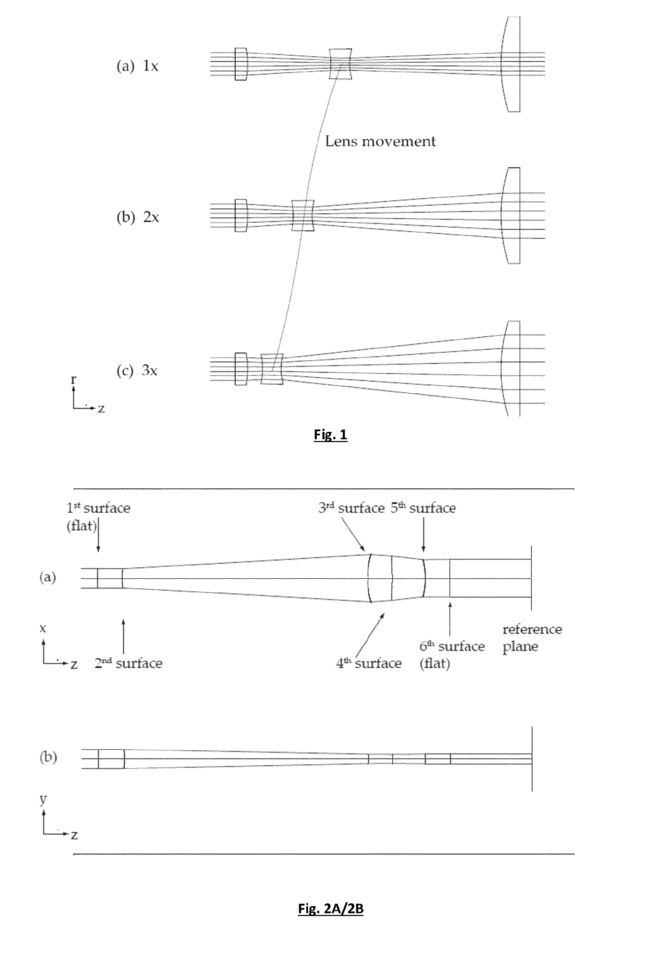

The basic working principle of such an optical zoom system is illustrated in Fig.1, by means of a system with three lenses (and four optical surfaces). The shown movement results in a variable magnification of a collimated laser beam. The lens profiles can be used to build a rotationally or cylindrically symmetric system. It is to be noted that the final beam shaping optics can be either constructed as a rotationally symmetric or a cylindrical zoom lens, depending on whether a radial magnification or magnification along one axis is needed. A sufficient number of lenses is needed in case diffraction limited performance is to be provided over the full zoom range. In practical systems there are often three groups of lenses which possibly contain more than one lens.

A zoom lens is a mechanical assembly of lens elements, typically in several air spaced groups, for which the focal length can be varied, as opposed to a fixed focal length lens. An afocal system (i.e. a system without focus) is an optical system that produces no net convergence or divergence of the beam, i.e. has an infinite effective focal length, often used in laser optics. Zoom lenses offer the convenience of variable focal length (e.g. in imaging applications) or different beam diameters (e.g. in zoom beam expanders). They can only achieve this convenience through compromises on optical performance throughout the full zoom range, for different wavelengths, weight and dimensions (number of used optical elements).

A variety of optical zoom systems have been proposed in the past that are capable of dynamically varying some of the optical beam properties. Interesting properties to make variable are the size and the irradiance distribution (shape) of the optical beam. One example can be found in the paper "Variable xy-UV beam expander for high-power laser beam shaping" (G. Nadorff et al., Proc.SPIE 8490, 84900I (2012)).

In US5543963 a system is disclosed wherein a train of air spaced optical mechanisms is capable of taking a raw laser beam and focusing it on a workpiece for a range of cut sizes with varying magnifications and energy densities while controlling divergence and providing optimum uniformity. The lenses are diffraction limited for optimum uniformity and edge definition. The system uses variable down collimators to condense the beam to an aperture plane. The aperture is then imaged to the workpiece with Barlow, zoom transfer, collimator and objective lenses.

As already mentioned, optical zoom systems to date make use of rotationally symmetric (spherical and/or aspherical) and/or cylindrically symmetric lenses to achieve continuous variation of some of the optical beam properties. These continuous variations possess the same symmetry of the optical zoom system, i.e. either rotational or cylindrical symmetry. Combinations of several sub-systems that may be rotated relative to each other are necessary to achieve a more complex zoom performance that cannot be achieved with a single system. Examples of such combinations, with or without relative rotation, can be found e.g. in the above-mentioned Nadorff paper and in US5095386.

Hence, there is a need for an optical zoom system wherein it is possible to achieve variation of at least one optical beam property without restriction to rotational or cylindrical symmetry, while avoiding the high cost and volume involved when using a large number of optical elements.

**Summary of the invention**

It is an object of embodiments of the present invention to provide for a compact optical zoom system that allows for varying at least one property of the optical beam while avoiding the limitations of a rotationally or cylindrically symmetric optical zoom system or combinations thereof.

The above objective is accomplished by the solution according to the present invention.

In a first aspect the invention relates to an optical zoom system comprising a zoom lens system with at least two lenses and means for moving the at least two lenses with respect to one another in a given direction so that at least one energy or irradiance distribution of the received light can be generated, whereby at least one of the lenses has at least one freeform shaped optical surface.

By providing at least one freeform shaped optical surface in at least one of the lenses of the optical zoom system the proposed solution indeed allows for variation of beam shape and/or wave front, both in an afocal zoom system and at a given reference plane. The beam irradiance distribution and/or wave front can be varied in size and/or shape by changing the relative position of the at least two lenses and are no longer limited to rotational or cylindrical symmetry. This variation is realised by properly designing the freeform element(s). The shape of the freeform element(s) has a direct impact on the shape of the output irradiance distribution and/or wave front, which takes away the limitation to rotational or cylindrical symmetry. Note that in case the energy or irradiance output distribution is variable, there are at least two output distributions. In case the energy or irradiance input distribution is variable and the distribution at the output has a fixed distribution, the received light has at least two input distributions while there is only one output distribution.

In a preferred embodiment the at least one freeform shaped optical surface has symmetry imposed by one or more symmetry properties of said at least one energy or irradiance output distribution, of an energy or irradiance input distribution of the received light or of both.

In another preferred embodiment the at least one freeform shaped optical surface has symmetry imposed by symmetry (one or more symmetry properties?) of an energy or irradiance input distribution of the received light.

The symmetry is typically mirror symmetry or n-fold rotational symmetry, but also other symmetries are possible.

In one embodiment the energy or irradiance output distribution is fixed and the received light has a variable energy or irradiance input distribution.

In another embodiment the energy or irradiance output distribution is variable and the received light has a fixed energy or irradiance input distribution.

In one embodiment the means for moving said at least two lenses is stepper motor or a MEMS (microelectromechanical system) device.

Advantageously, the given direction is a common axis of the at least two lenses.

In an embodiment the energy or irradiance output distribution is generated in a reference surface. In certain embodiments the reference surface may be tilted with respect to the given direction.

In one embodiment the zoom lens system comprises at least three lenses.

In one embodiment the zoom lens system is an afocal zoom system.

In one embodiment the optical zoom system comprises a light source.

In another embodiment the optical zoom system is arranged for generating different variable magnifications in x and y direction.

In another embodiment the optical system comprises at least one diffractive optical element or phase element. This allows for additional control on the wave fronts.

For purposes of summarizing the invention and the advantages achieved over the prior art, certain objects and advantages of the invention have been described herein above. Of course, it is to be understood that not necessarily all such objects or advantages may be achieved in accordance with any particular embodiment of the invention. Thus, for example, those skilled in the art will recognize that the invention may be embodied or carried out in a manner that achieves or optimizes one advantage or group of advantages as taught herein without necessarily achieving other objects or advantages as may be taught or suggested herein.

The above and other aspects of the invention will be apparent from and elucidated with reference to the embodiment(s) described hereinafter.

**Brief description of the drawings**

The invention will now be described further, by way of example, with reference to the accompanying drawings, wherein like reference numerals refer to like elements in the various figures.

Fig.1 illustrates the working principle of a basic afocal optical zoom system.

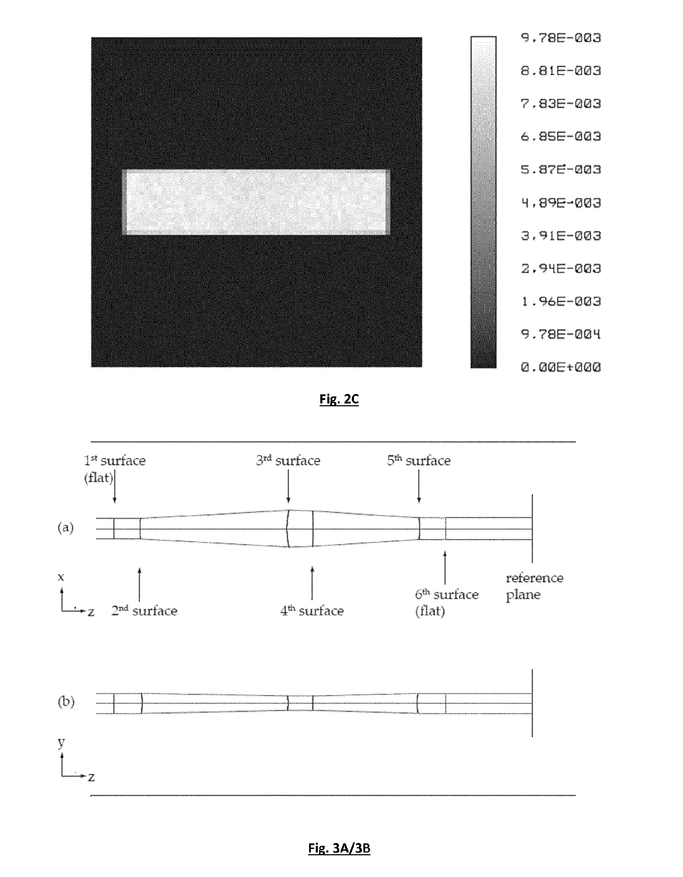

Fig.2A and 2B illustrate the cross sections in the x-z and y-z plane, respectively, of an optical zoom system operating as an XY beam expander with different magnifications in x- and y-direction in an afocal configuration. The output intensity remains unchanged and the optical system provides a magnification of 2x in x-direction and 0.5x in y-direction. Fig.2C illustrates the corresponding intensity distribution with 12mm x 3mm side lengths, for a squared flat-top intensity distribution of 6mm x 6mm side lengths at the input.

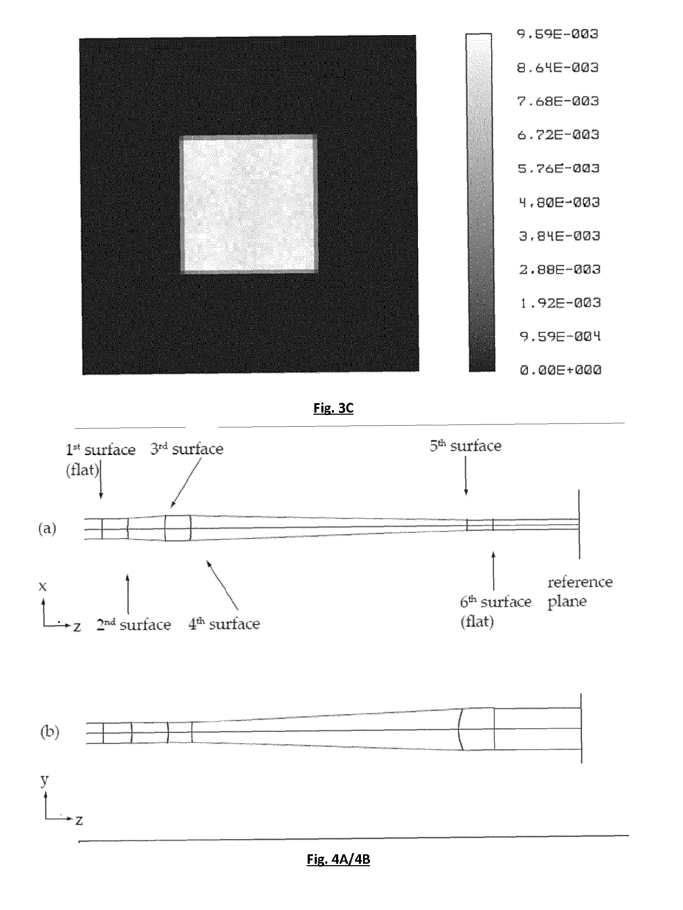

Fig.3A and 3B illustrate the cross sections in the x-z and y-z plane, respectively, of an optical zoom system operating as an XY beam expander with different magnifications in x- and y-direction in an afocal configuration. The output intensity remains unchanged and the optical system provides a magnification of 1x in x-direction and 1x in y-direction, the neutral position. Fig.3C illustrates the corresponding intensity distribution with 6mm x 6mm side lengths, for a squared flat-top intensity distribution of 6mm x 6mm side lengths at the input.

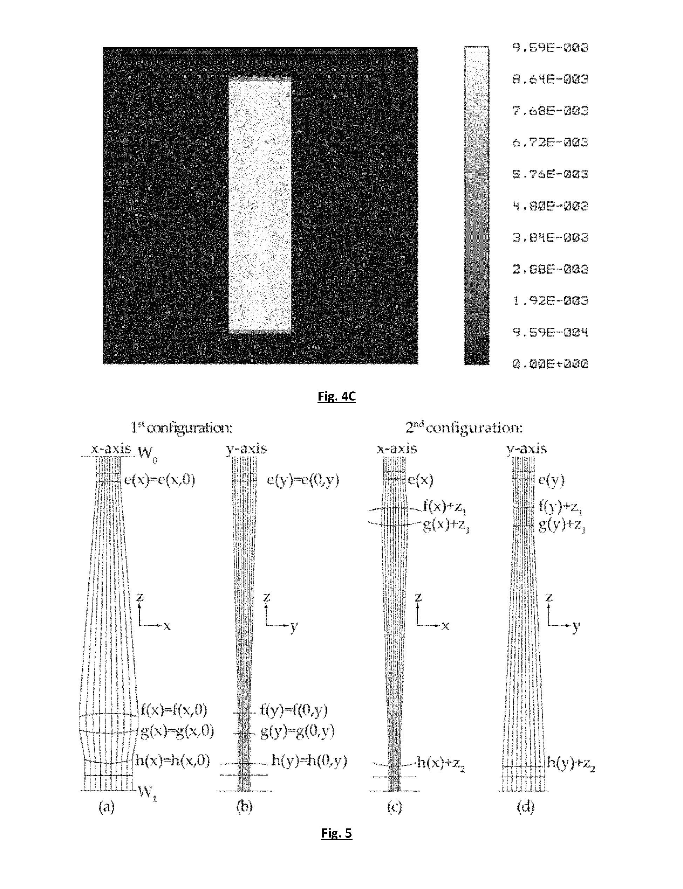

Fig.4A and 4B illustrate the cross sections in the x-z and y-z plane, respectively, of an optical zoom system operating as an XY beam expander with different magnifications in x- and y-direction in an afocal configuration. The output intensity remains unchanged and the optical system provides a magnification of 0.5x in x-direction and 2x in y-direction. Fig.4C illustrates the corresponding intensity distribution with 3mm x 12mm side lengths, for a squared flat-top intensity distribution of 6mm x 6mm side lengths at the input.

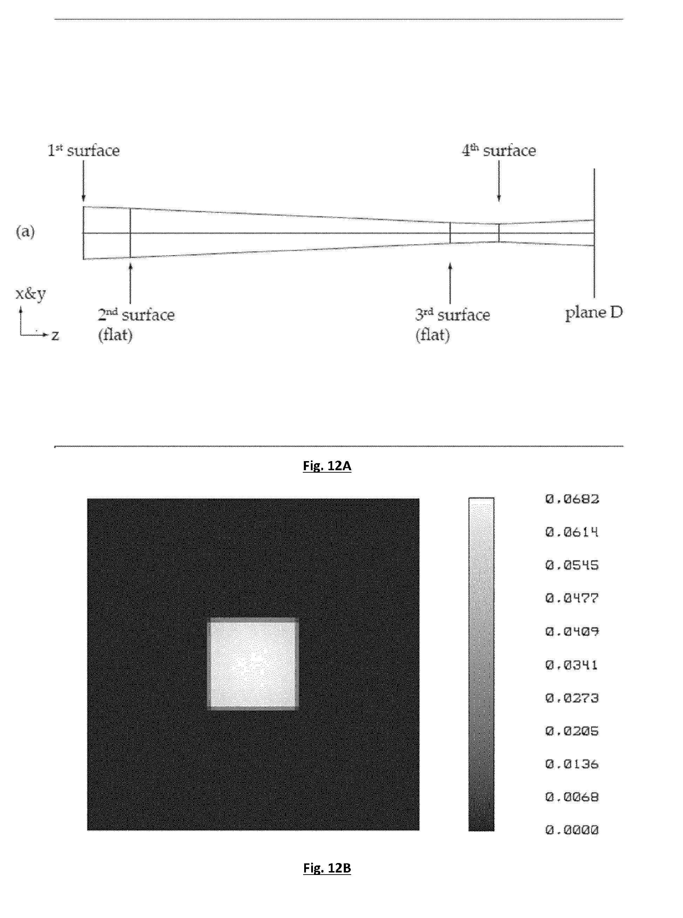

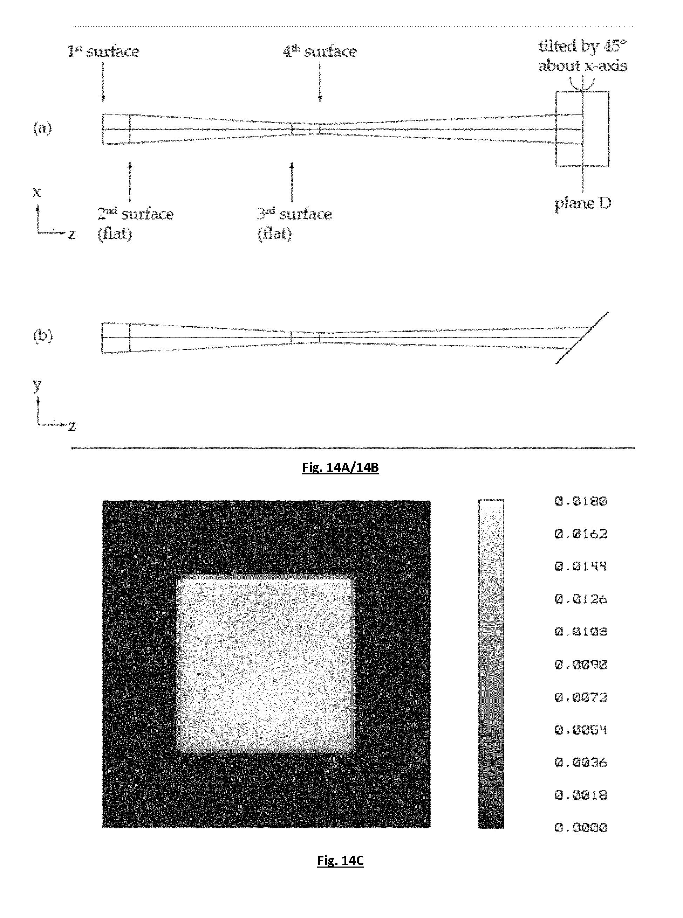

Fig.5 illustrates two configurations similar to those in Fig.12 and 14, wherein the required initial values and functions are indicated to derive the conditional equations from Fermat's principle.

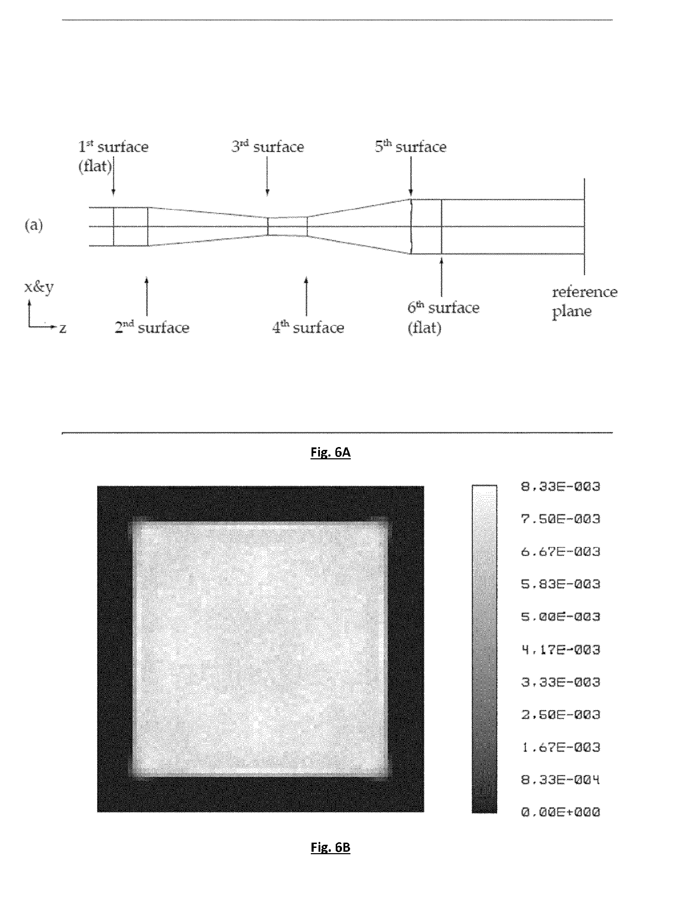

Fig.6A illustrates the cross sections both in the x-z and y-z plane of an optical zoom system that transforms a Gaussian input beam to a squared flat-top intensity distribution with variable side length in an afocal configuration. The output intensity distribution in a given reference plane behind the optical zoom system has a side length of 12mm. Fig.6B illustrates the corresponding intensity distribution.

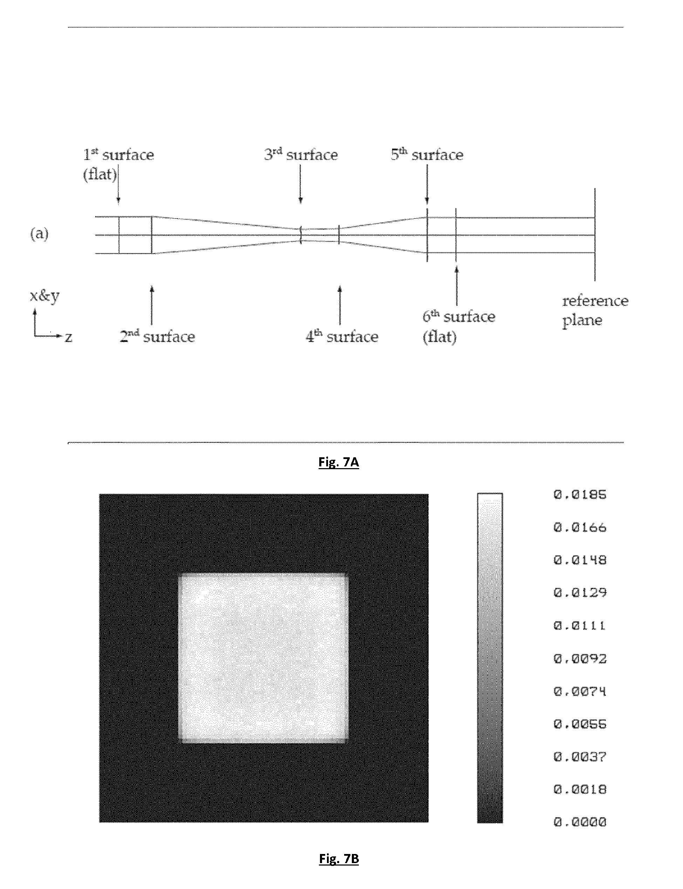

Fig.7A illustrates the cross sections both in the x-z and y-z plane of an optical zoom system that transforms a Gaussian input beam to a squared flat-top intensity distribution with variable side length in an afocal configuration. The output intensity distribution in a given reference plane behind the optical zoom system has a side length of 8mm. Fig.7B illustrates the corresponding intensity distribution.

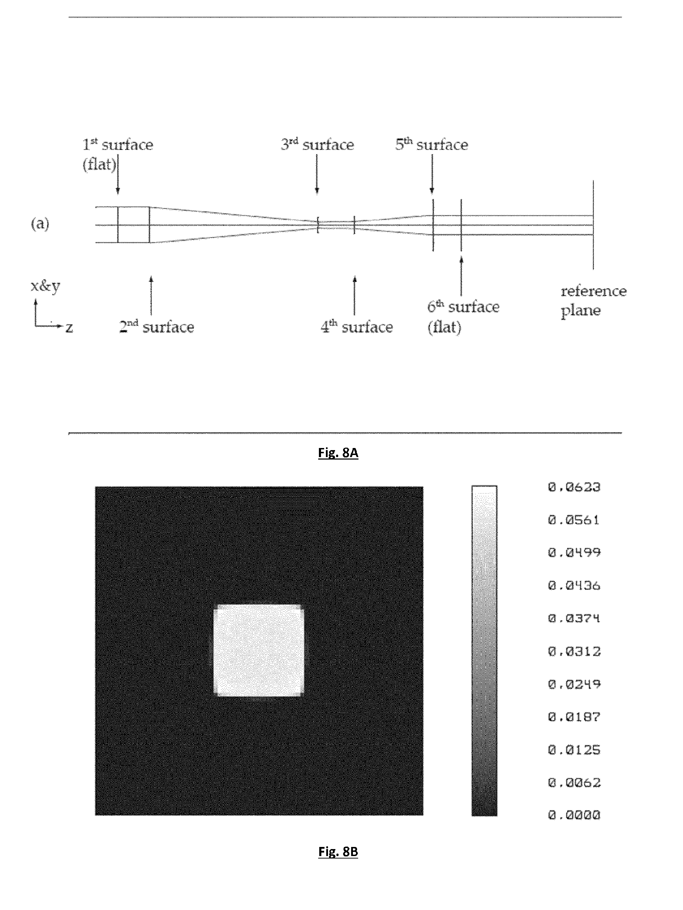

Fig.8A illustrates the cross sections both in the x-z and y-z plane of an optical zoom system that transforms a Gaussian input beam to a squared flat-top intensity distribution with variable side length in an afocal configuration. The output intensity distribution in a given reference plane behind the optical zoom system has a side length of 4mm. Fig.8B illustrates the corresponding intensity distribution.

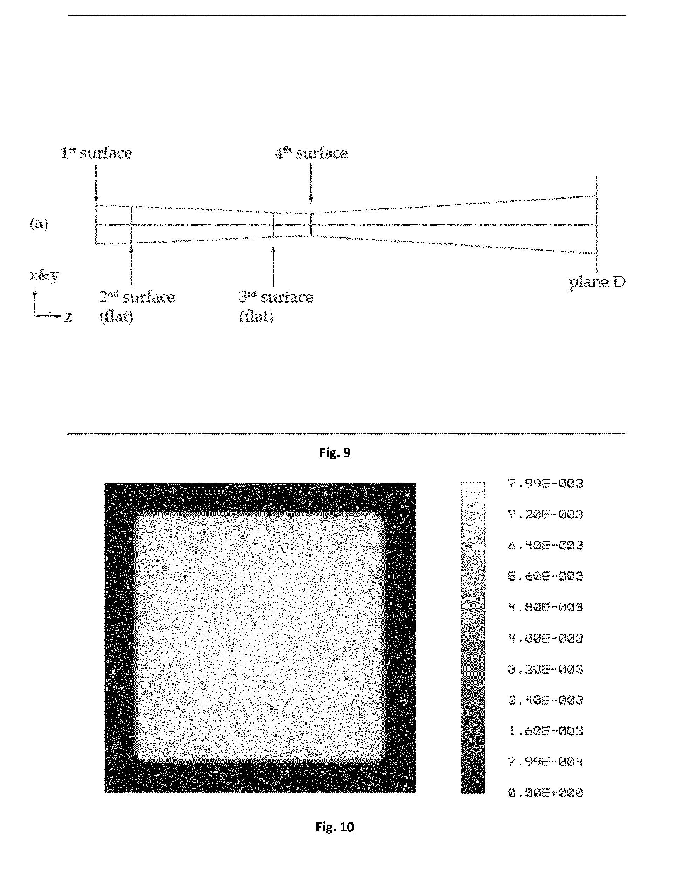

Fig.9 illustrates the cross section both in x-z and y-z plane of an optical zoom system that transforms a collimated Gaussian input beam to a squared flat-top intensity distribution with side length of 12mm in plane D.

Fig.10 illustrates the intensity distribution related to Fig.9.

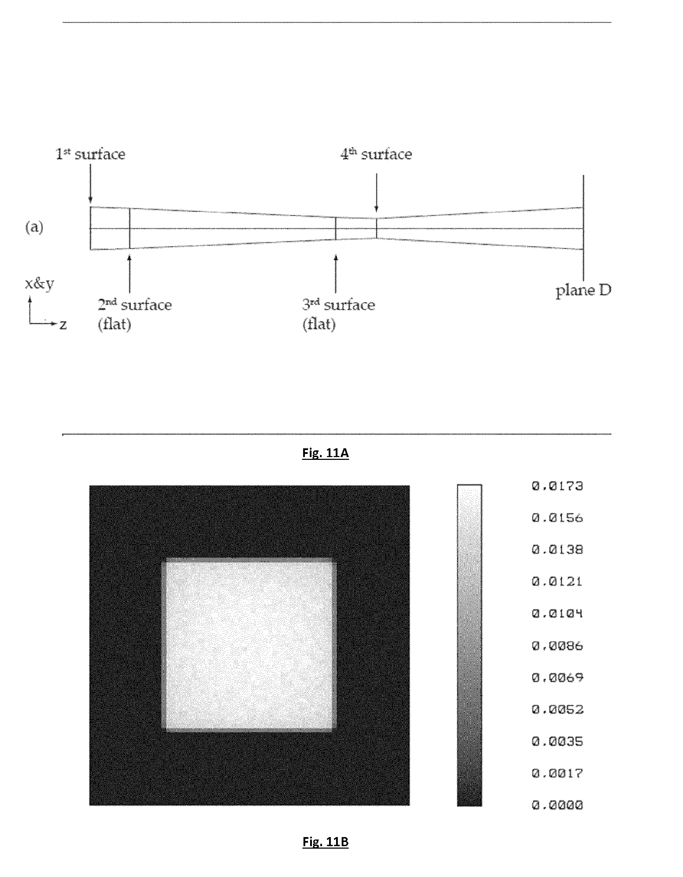

Fig.11A illustrates the cross section both in x-z and y-z plane of an optical zoom system after the lenses have been moved, that transforms a Gaussian input beam to a squared flat-top intensity distribution with side length of 8mm in plane D. Fig.11B shows the intensity distribution.

Fig.12A illustrates the cross section both in x-z and y-z plane of an optical zoom system after the lenses have been moved, that transforms a Gaussian input beam to a squared flat-top intensity distribution with side length of 4mm in plane D. Fig.12B shows the intensity distribution.

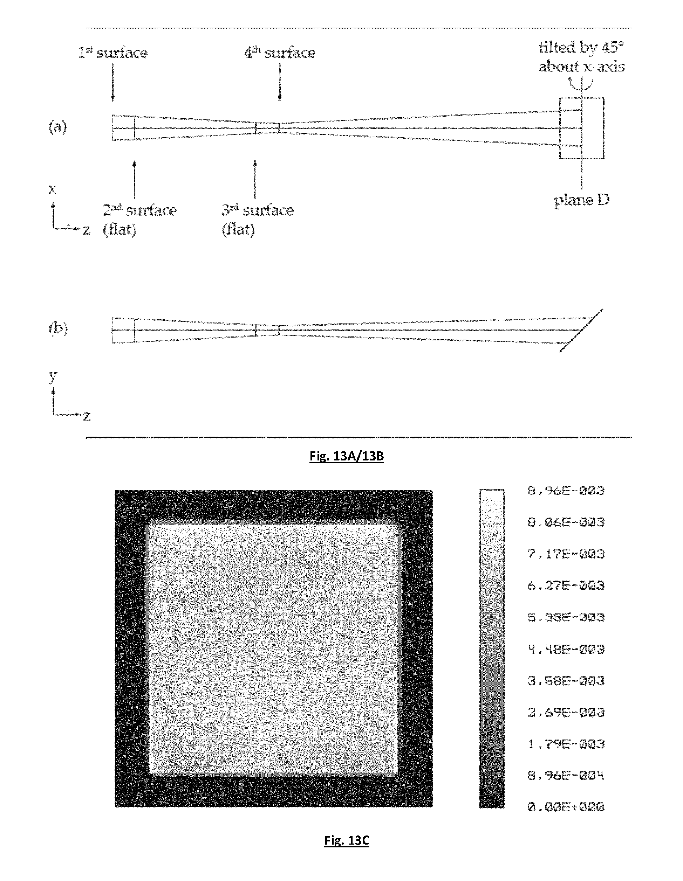

Fig.13A and 13B illustrates illustrate the cross sections in the x-z and y-z plane of an optical zoom system that transforms a Gaussian input beam to a squared flat-top intensity distribution with side length of 12mm in a 45° tilted plane D. Fig.13C illustrates the corresponding intensity distribution.

Fig.14A and 14B illustrate the cross sections in the x-z and y-z plane of an optical zoom system after the lenses have been moved, that transforms a Gaussian input beam to a squared flat-top intensity distribution with side length of 8mm in a 45° tilted plane D. Fig.14C illustrates the corresponding intensity distribution.

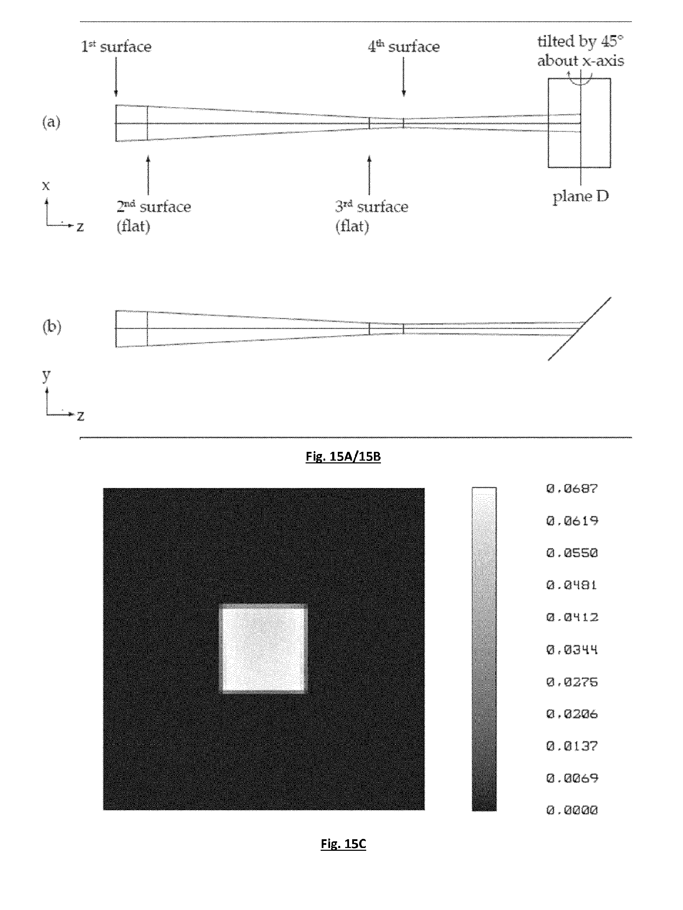

Fig.15A and 15B illustrate the cross sections in the x-z and y-z plane of an optical zoom system after the lenses have been moved, that transforms a Gaussian input beam to a squared flat-top intensity distribution with side length of 4mm in a 45° tilted plane D. Fig.15C illustrates the corresponding intensity distribution.

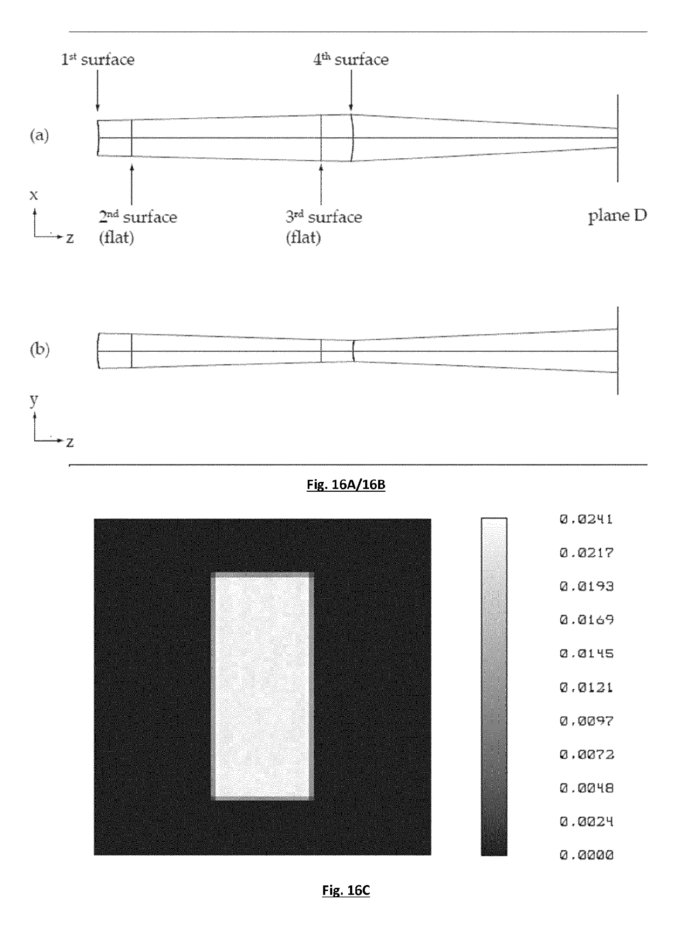

Fig.16A and 16B illustrate the cross sections in x-z and y-z plane, respectively, of an optical zoom system that transforms a Gaussian input beam to a rectangular flat-top intensity distribution with side lengths of 4mm x 10mm in plane D. Fig.16C illustrates the corresponding intensity distribution.

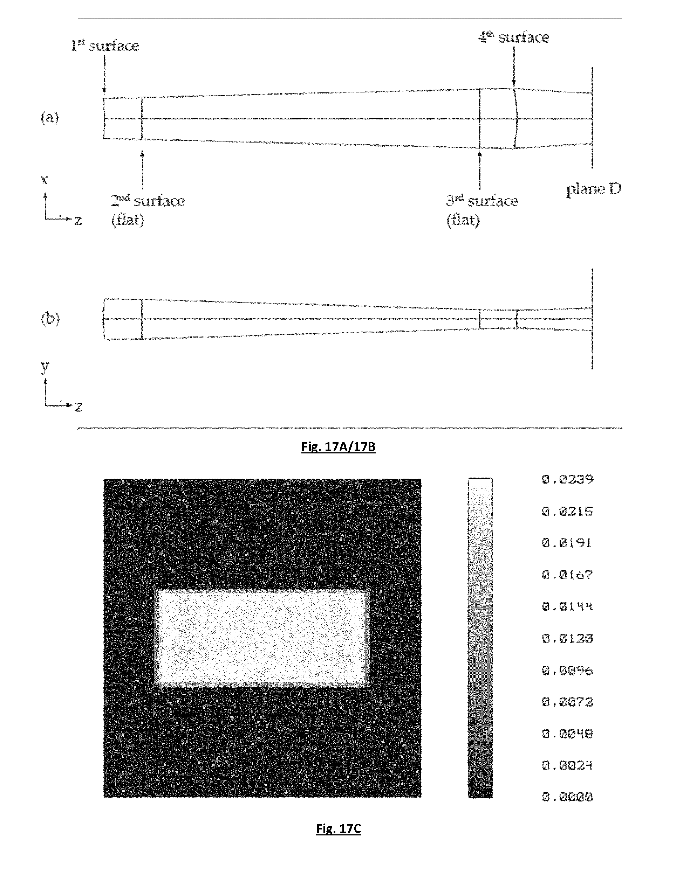

Fig.17A and 17B illustrate the cross sections in x-z and y-z plane, respectively, of an optical zoom system that transforms a Gaussian input beam to a rectangular flat-top intensity distribution with side lengths of 10mm x 4mm in plane D. Fig.17C illustrates the corresponding intensity distribution.

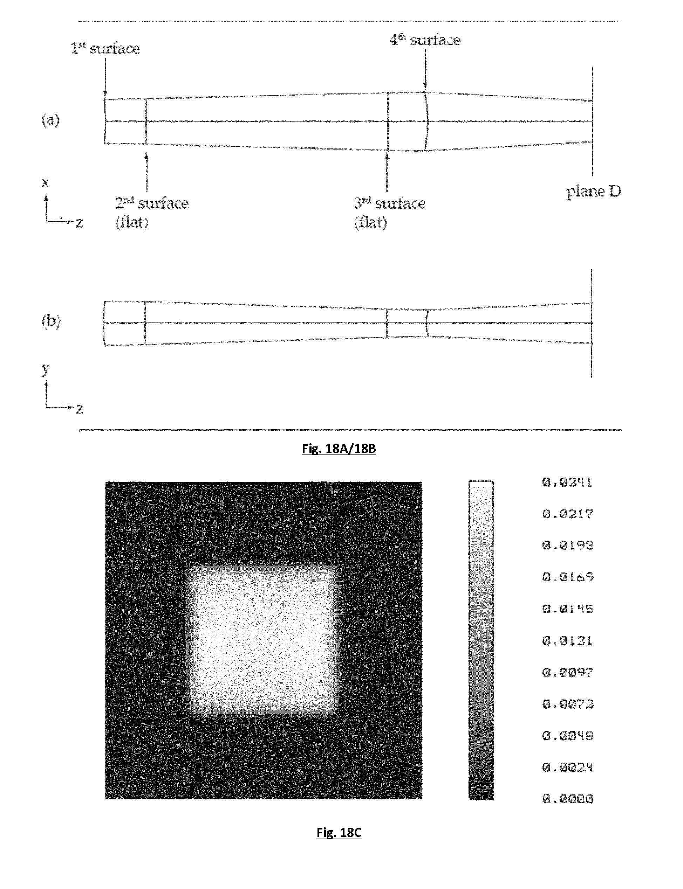

Fig.18A and 18B illustrate the cross sections in x-z and y-z plane, respectively, of an optical zoom system that transforms a Gaussian input beam to a rectangular flat-top intensity distribution with side lengths of 7mm x 7mm in plane D. Fig.18C illustrates the corresponding intensity distribution.

## Detailed description of illustrative embodiments

The present invention will be described with respect to particular embodiments and with reference to certain drawings but the invention is not limited thereto but only by the claims.

Furthermore, the terms first, second and the like in the description and in the claims, are used for distinguishing between similar elements and not necessarily for describing a sequence, either temporally, spatially, in ranking or in any other manner. It is to be understood that the terms so used are interchangeable under appropriate circumstances and that the embodiments of the invention described herein are capable of operation in other sequences than described or illustrated herein.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

Similarly it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

It should be noted that the use of particular terminology when describing certain features or aspects of the invention should not be taken to imply that the terminology is being redefined herein to be restricted to include any specific characteristics of the features or aspects of the invention with which that terminology is associated.

In the description provided herein, numerous specific details are set forth. However, it is understood that embodiments of the invention may be practiced without these specific details. In other instances, well-known methods, structures and techniques have not been shown in detail in order not to obscure an understanding of this description.

In order to provide an optical zoom system capable of implementing different irradiance distributions the present invention proposes the use of a zoom lens system wherein at least one lens has a freeform optical surface. In principle a single surface is sufficient to transform an incident collimated beam of light with a given intensity distribution (e.g. a Gaussian) to a predefined beam spot shape at a reference plane. Two surfaces can form a zoom system with different irradiance distributions in a plane, for example with different magnifications in x- and y-direction, respectively, as set out in detail later in this description. The proposed solution offers the advantage that there is no more restriction to rotational or cylindrical symmetry.

In some cases, controlling only the intensity distribution in a given reference plane is not sufficient to generate the predefined spot shapes when coherent light, e.g. when a single mode Gaussian laser is used. Besides the intensity distribution, the wave front has to be also predefined in order to take the physical optics nature of coherent light into account. To control both the intensity distribution and wave front in a given plane, at least two surfaces are needed. In such cases, more optical elements are required (see for example the afocal zoom systems, where the wave front at the output is controlled and predefined to be flat). Alternative options are the use of diffractive optical elements or phase elements in combination with the zoom system to gain additional control on the wave fronts. A possible solution is described in patent US5864430.

A freeform optical surface is a surface which, if described in Cartesian coordinates, needs at least two variables to be adequately parameterized. In case of rotational symmetry, a surface can be parameterized by the single variable r with $r=sqrt(x^2+y^2)$, whereas for cylindrical symmetry, a surface can be parameterized by either the single variable x or y. Freeform optical surfaces as such are well known in the art. They can be described by different polynomial functions (e.g. XY polynomials, Zernike polynomials, etc), splines or non-uniform rational basis spline (NURBS) surfaces patches or other representations. Freeform surfaces offer tremendous additional degrees of freedom. However, the increased number of free parameters imposes additional demands on multiparametric optimization techniques and can make the optical design task very challenging. In contrast to optimization-based optical design, a direct optical design approach is a mathematical procedure that delivers the optical surface equations (or point clouds) for an optical system that, for example, transfers a given input ray bundle set to a given output ray bundle set without iterations. In general, this implies that no restrictions are imposed on possible surface shapes - it is freeform by definition. Direct design methods are more complex to describe and to implement. However, they don't suffer from the drawbacks of optimization techniques, which can easily get lost in the infinitude of local minima or the large number of parameters that needs to be optimized.

However, freeform optical surfaces have not been applied yet in optical zoom systems to achieve a certain zoom functionality that is not restricted to either rotational or cylindrical symmetry, while yielding a compact system, amongst other things because of this complexity. Moreover, the design of suitable freeform optical surfaces is in that case further complicated by the obvious presence of moving optical elements in the zoom system. As already mentioned, the present invention proposes an optical zoom system wherein at least one lens with at least one complex freeform shaped surface is advantageously applied in a zoom system.

In order to be advantageously applied in a zoom system, the freeform surface shape(s) is (are) directly linked to the variety of output irradiance distributions and/or wave fronts that the zoom system will have to generate throughout the full zoom range. If all the output irradiance distributions and/or wave fronts including the input irradiance distribution(s) and/or wave fronts have a common shared symmetry, the freeform optical surface(s) share(s) the same symmetry. Possible symmetries are reflectional symmetry (mirror symmetry) or n-fold rotational symmetries among others. To illustrate this relationship, symmetry considerations for the five examples provided below in this description are listed here:

Example 1 : The afocal XY beam expander allows variable different expansion ratios in x and y direction, while maintaining the initial collimated input irradiance distribution. The variable aspect ratios in x and y can be translated to a 2-fold rotational symmetry, meaning that the variety of output distributions throughout the zoom range is invariant under 180° rotations about the common optical axis. The same 2-fold rotational symmetry applies for the freeform optical surfaces, which is directly reflected by the fact that the surface functions f(x,y) only contain even terms.

Example 2 : The afocal zoom system that transforms an input Gaussian to square flat-top output distributions of different size throughout the zoom range, can be translated to a 4-fold rotational symmetry, meaning that the variety of output distributions is invariant under 90° rotations about the common optical axis. The same 4-fold rotational symmetry applies for the freeform optical surfaces, reflected by the fact that the surface functions f(x,y) consist of even terms only, and the x- and y-dependency is identical, thus f(x,y)=g(x)+g(y).

Example 3 : The focused zoom system that transforms an input Gaussian to square flat-top output distributions of different size throughout the zoom range is identical to Example 2 and thus shares the same 4-fold freeform surface symmetry.

Example 4 : The considered example is identical to the previous Example 3, however the tilt of the reference plane breaks the 4-fold symmetry of optical design problem. When plane D is rotated about the x-axis by 45°, the only remaining symmetry is a mirror symmetry at y-z plane. The mirror symmetry is reflected by the fact that the surface functions f(x,y) consist of a general XY polynomial function, whereas all terms with an x-dependent part have only even orders.

Example 5 : The focused zoom system that transforms an input Gaussian to rectangular flat-top output distributions of different size and aspect ratio throughout the zoom range can be translated to a 2-fold rotational symmetry; thus the surfaces share the same 2-fold rotational symmetry as already discussed for Example 1.

Examples 1 and 2 below illustrate an afocal optical zoom system according to an embodiment of this invention. The exemplary systems include at least three optical elements (for example, three lenses, where four lens surfaces are shaped) that can move relative to each other in a given direction. Typically the given direction is a common axis of the optical elements or of one of the groups of optical elements. The optical surfaces may face each other, may face away from one another, four or more optical surfaces may be shaped. The optical elements may have given surface shapes, diffractive characteristics, comprising gradient-index materials, etc so that the wave front can be modified. Preferably, these surface shapes are defined in a way to generate different predetermined output energy distributions at the exit of the last optical surface, whereby the overall optical system is working as an afocal zoom system.

When radiation from a source (for example, laser light) with a given intensity distribution passes through the optical zoom system, a different output intensity distribution results at the exit of the afocal zoom system and is maintained while propagating within physical limits. The output intensity distribution shape may be dynamically varied by moving the optical elements of the zoom system relative to each other in a given direction, while maintaining the afocal characteristic of the optical zoom system. The movement of the optical elements may be accomplished using MEMS, stepper motors or manual translation stages, other methodologies are also contemplated herein. Either the light source or the adjacent target plane may be moved.

In an inverse operation mode, the output intensity distribution may be maintained while the input intensity distribution may vary, again keeping the afocal characteristic of the optical zoom system. One example of such a system transforms a collimated input Gaussian beam with a scalable input distribution size to a fixed rectangular (squared) flat-top intensity distribution at the exit of the optical zoom system, while keeping the afocal characteristic of the optical zoom

EP 3 147 697 A1

system. Another example of such a system is an XY beam expander that transforms a collimated input beam to an unchanged output intensity distribution that can be scaled in x- and y-direction independently, resulting in a collimated output beam with unchanged intensity distribution and a variable aspect ratio in x- and y-direction.

Additional optical elements and/or freeform optical surfaces may be used to achieve an optical zoom system adapted for achromatization, a specific temperature range, aberration corrections, etc... Further also different materials may be used.

Further optical zoom systems according to the present invention are illustrated in Examples 3, 4 and 5. The exemplary zoom systems contain a plurality of optical elements that can move relative to each other in a given direction, e.g. the z axis. Typically the given direction is a common axis of the lenses or of one of the lens groups. Note however that also tilted axes can be considered. The optical surfaces may face each other or may face away from one another. Two or more optical surfaces may be shaped. The optical elements may have given surface shapes and/or diffractive characteristics, comprise gradient-index materials, etc to be able to modify the wave front. Preferably, these surface shapes are defined in a way to generate different predetermined output energy distributions in a plane D.

When radiation from a source (for example, laser light) with a given intensity distribution passes through the optical zoom system, a different output intensity distribution results in a plane D adjacent to the optical zoom system. The shape of the output intensity distribution may be dynamically varied by moving the optical elements of the zoom system relative to each other in a given direction. The movement of the optical elements may be accomplished using MEMS, stepper motors or manual translation stages, but other methodologies can also be contemplated herein. Besides the optical elements of the zoom system, the source and/or the target plane D may be moved.

In an inverse operation mode, the output intensity distribution may be maintained while the input intensity distribution may vary. One example of such a system transforms a collimated input Gaussian beam to a fixed rectangular or squared flat-top intensity distribution in plane D where the input distribution size can be scaled. Another example of such a system transforms a collimated input Gaussian beam to a rectangular intensity distribution in plane D where the aspect ratio of the output flat-top intensity distribution can be varied.

More optical elements and/or freeform optical surfaces may be used to implement an optical zoom system which achieves achromatization, athermalization, aberration corrections, etc... Further also different materials may be used.

The five examples below illustrating the present invention share the following characteristics :

- Three exemplary configurations are shown, that is the first and the last zoom position, and one additional intermediate zoom step to show how the lens' movements adapt the output size and/or shape of the incoming collimated beam.
- All examples can be operated in a continuous zoom mode, meaning that the output size and/or shape is also continuously varied according to the zoom functionality illustrated by the three configurations. Note that in other examples also the use of a number of discrete zoom modes can be envisaged.
- All examples are designed for lenses from PMMA with a refractive index of 1.48 at the wavelength 632.8 nm.
- The input beam is a collimated Gaussian distribution with waist diameter of 2.366 mm if not stated otherwise.
- All lenses (with either one or two freeform surfaces) have a central thickness of 7.5 mm.

Example 1

Reference is made to the exemplary embodiment of Fig.2, wherein an optical zoom system according to the present invention includes a plurality of optical elements (in this case, three freeform lenses, two with one plane and one freeform surface, one with two freeform surfaces), movable along one axis common to the various optical elements. The surface shapes are selected to generate an afocal XY zoom beam expander system capable of providing different magnifications in x-and y-direction, respectively. As the beam is only expanded, the irradiance distribution remains unchanged. The x- and y-dimensions are changed by moving the lenses, while maintaining the afocal properties. The three lens configurations shown in Fig.2A/2B, 3A/3B and 4A/4B, are described by the distance d1 between the first and the second optical element and the distance d2 between the second and third optical element, that provide the positions of all elements in each configuration.

|     | Config 1  | Config 2  | Config 3  |
| --- | --------- | --------- | --------- |
| d1  | 7.50E+01  | 4.24E+01  | 1.07E+01  |
| d2  | 1.00E+01  | 3.07E+01  | 8.00E+01  |

The mathematical surfaces can be described by surface functions of the type

$$z(x,y) = \sum_{i=1}^{N} a_{2i}x^{2i} + \sum_{i=1}^{N} b_{2i}y^{2i}$$

where z represents the surface sag distribution of the freeform surfaces with different cross sections in the x-z and y-z planes. For the shown example the first 12 coefficients of the four freeform surfaces (i.e. surfaces 2, 3, 4 and 5 - see Fig.2A) are given as

| Surf # | a2 | b2 | a4 | b4 | a6 | b6 |
|---|---|---|---|---|---|---|
| 2 | 0.019 | -7.03E-03 | 4.32E-05 | 4.96E-06 | -4.19E-06 | -2.99E-07 |
| 3 | 0.016 | -9.50E-04 | 3.71E-05 | -9.18E-04 | 7.92E-07 | -1.66E-05 |
| 4 | -8.28E-03 | 2.50E-02 | 2.82E-05 | -1.44E-03 | 1.49E-06 | 3.15E-05 |
| 5 | -0.02 | 9.38E-03 | 2.98E-05 | -1.62E-05 | -9.03E-07 | -8.54E-07 |

| Surf# | a8 | b8 | a10 | b10 | a12 | b12 |
|---|---|---|---|---|---|---|
| 2 | 1.42E-07 | 1.10E-08 | -2.52E-09 | -2.34E-10 | 1.89E-11 | 2.12E-12 |
| 3 | -5.42E-09 | 2.71E-06 | 1.38E-11 | -6.59E-08 | -7.35 E-15 | 5.22E-10 |
| 4 | -1.09E-08 | 3.74E-07 | 3.05E-11 | -2.72E-08 | -3.36E-14 | 5.76E-10 |
| 5 | 1.52E-08 | 1.51E-08 | -9.21E-11 | -9.27E-11 | 1.49E-13 | 1.99E-13 |

Fig.2C, 3C and 4C illustrate the respective corresponding intensity distributions. To better visualize the different magnifications, the input here is chosen to be a flat-top intensity distribution with side lengths of 6mm x 6mm at the entry of the XY zoom beam expander system.

The concept of a variable beam expansion in x- and y-direction based on freeform lenses is illustrated in Fig.5. The optical system comprises (just as the one shown in Fig.2) three elements and the first lens and the last lens each have one plane surface. In the most general case, all three lenses are allowed to move relatively to each other. Furthermore, as both incoming and outgoing geometric wave fronts should be plane (i.e. all rays are parallel), the plane entry and exit surfaces in Fig.5 have no optical power and can be neglected, assuming that the input and output rays are immersed in the lens material with refractive index $n_2$.

It is well-known from literature, that two optical surfaces are sufficient to design rotationally symmetric or freeform laser beam shapers. The common design approach is based on the geometric ray mapping relationship which describes where an initial ray that is refracted at the first surface is redirected to and re-collimated at the second surface. In case of a basic beam expander, the ray mapping relationship is characterized by a linear function, where the slope value defines the magnification. By using four shaped optical surfaces in Fig.5 (a) and (c), the lenses can be designed to fulfill different magnification values by shifting the lenses (in a specific way). Such a design, if the lens profiles are rotated about the common optical axis, would then perform as a conventional zoom beam expander. Besides the different magnifications along the x-axis, the system is supposed to provide different magnifications along the y-axis, while the lenses are moved in a specific way. The freeform lens surfaces can be described by four functions e(x,y), f (x,y), g(x,y) and h(x,y). The different magnifications along two orthogonal axes mean that the problem is separable and solutions along the x- and y-axis can be obtained independently. However, the fact that corresponding lens profiles along the x- and y-axis should obviously share common lens vertices introduces a relationship between the otherwise independent sub-solutions. The relative displacements of the lenses in configuration 2 with respect to configuration 1 are introduced through two off-set values $z_1$ and $z_2$. From now on, a simplified notation is used for the independent lens profiles e(x) = e(x,0) and e(y) = e(0,y), and accordingly for f, g and h.

The design problem along the x-axis is now considered more in detail, see Fig.5 (a) and (c). Note that the y-axis solution can be obtained in a similar way. An arbitrary ray path through the optical system for the first configuration in (a) can be described by a sequence of points $(x,W_0)$, $(x,e(x))$, $(s(x),f(s(x)))$, $(t(x),g(t(x)))$, $(m_1(x),h(m_1(x))$ and $(m_1(x),W_1)$, where the auxiliary functions s(x) and t(x) describe where the ray intersects with the lens surfaces f and g as a function of x. Finally, as intended by this optical design, the ray intersects the last surface h at an x-coordinate value which is given by the (linear) ray mapping relationship $m_1(x)$. The $W_0$ and $W_1$ denote arbitrary but fixed positions in z-direction of reference points on both incoming and outgoing plane wave fronts. The overall optical path length of a ray can then be expressed in sections $d_1$, ... $d_5$ using vector geometry.

$$d_1 = -n_2(W_0 - e(x)) \qquad\qquad d_6 = -n_2(W_0 - e(x)) \qquad\qquad (1)$$

$$d_2 = \sqrt{(e(x) - f(s))^2 + (x - s)^2} \qquad d_7 = \sqrt{(e(x) - f(u) - z_1)^2 + (x - u)^2} \qquad (2)$$

$$d_3 = n_2\sqrt{(f(s) - g(t))^2 + (s - t)^2} \qquad d_8 = n_2\sqrt{(f(u) - g(v))^2 + (u - v)^2} \qquad (3)$$

$$d_4 = \sqrt{(g(t) - h(m_1))^2 + (t - m_1)^2} \qquad d_9 = \sqrt{(g(v) + z_1 - h(m_2) - z_2)^2 + (v - m_2)^2} \qquad (4)$$

$$d_5 = n_2(h(m_1) - W_1) \qquad\qquad d_{10} = n_2(h(m_2) + z_2 - W_1) \qquad (5)$$

Similarly, the optical path of an arbitrary ray through the optical system for the 2nd configuration in (c) can be expressed in sections $d_6, \ldots d_{10}$. The auxiliary functions u(x) and v(x) describe intermediate ray positions on surfaces f and g, the values $z_1$ and $z_2$ define shifts of the lenses, and the ray mapping relationship $m_2(x)$ defines where the ray intersects the last surface h. All four lenses are of the same material with refractive index $n_2$ at a certain wavelength. Fermat's principle states that a light ray between two fixed points will follow the path for which the optical path length is an extremum. Consider two arbitrary but fixed points on the wave front defined by (x, $W_0$ and (s(x),f(s(x)) on the second lens profile: a ray coming from the wave front and passing through (s(x),f(s(x)) must be such that the combined optical path length $d_1 + d_2$ is an extremum. With both points kept fixed, the only remaining variable to achieve an extremum for $d_1 + d_2$ is the point (x,e(x)) on the first lens profile. Fermat's principle thus implies that $D_1 = \partial/\partial x (d_1 + d_2) = 0$, where the partial derivative indicates that the point (s,g(s)) is kept fixed. By applying Fermat's principle to all neighbouring optical path length sections $d_1, \ldots d_5$ by pairs, it is possible to derive four functional differential equations

$$D_i = \frac{\partial}{\partial \chi_i}(d_i + d_{i+1}) = 0 \quad (i = 1..4), \quad \chi = \{x, s, t, m_1\}. \qquad (6)$$

for the first configuration in Fig.5(a). In a similar manner, it is possible to derive four additional functional differential equations

$$D_{i-1} = \frac{\partial}{\partial \chi_i}(d_i + d_{i+1}) = 0 \quad (i = 6..9), \quad \chi = \{x, u, v, m_2\}. \qquad (7)$$

for the second configuration in Fig.5(c). The lens design along the x-axis is thus fully described by eight functional differential equations $D_1, \ldots, D_8$ for four unknown surface profiles e, f, g and h and four unknown auxiliary functions s, t, u and v. Suppose that the unknown functions are an analytic and smooth solution to the functional differential equations, Taylor's theorem implies that the functions must be infinitely differentiable and have a power-series representation. Thus the eight functions can be expressed by power series

$$e(x) = \sum_{i=0}^{\infty} e_i x^i \qquad f(x) = \sum_{i=0}^{\infty} f_i x^i \qquad g(x) = \sum_{i=0}^{\infty} g_i x^i \qquad h(x) = \sum_{i=0}^{\infty} h_i x^i \qquad (8)$$

$$s(x) = \sum_{i=0}^{\infty} s_i x^i \qquad t(x) = \sum_{i=0}^{\infty} t_i x^i \qquad u(x) = \sum_{i=0}^{\infty} u_i x^i \qquad v(x) = \sum_{i=0}^{\infty} v_i x^i \qquad (9)$$

centred at the optical axis. It is now possible to calculate $(n+1)^{th}$ order Taylor series coefficients for the surface and $n^{th}$ order for the auxiliary functions by solving equations

$$\lim_{x \to 0} \frac{\partial^n}{\partial x^n} D_i = 0 \quad (i = 1..8), \quad \{n \in \mathbb{N}_1\}. \qquad (10)$$

in ascending order. For n = 0, Eqs. (10) are satisfied as long as all first derivatives are equal to zero, i.e. $e_1$, $f_1$, $g_1$ and $h_1$ equal zero; and the auxiliary functions coefficients $s_0$, $t_0$, $u_0$ and $v_0$ are zero too. This is also expected from the symmetry of the lenses with respect to the optical axis. There are two further cases that need to be solved:

- for n = 1, Eqs.(10) result in non-linear algebraic equations for Taylor series coefficients $e_2$, $f_2$, $g_2$, $h_2$, $s_1$, $t_1$, $u_1$ and $v_1$. These equations can be solved using e.g. MATLAB's fsolve function or any other solver for systems of non-linear equations.
- for n > 1, Eqs.(10) result in a system of linear equations for Taylor series coefficients $e_{n+1}$, $f_{n+1}$, $g_{n+1}$, $h_{n+1}$, $s_n$, $t_n$, $u_n$ and $v_n$; where the coefficients of the system and the constant terms are mathematical expressions dependent on previously calculated Taylor series coefficients of lower order. Thus, it is possible to calculate the Taylor series coefficients in ascending order for n = 2,3,4, ... by solving each time the linear system of equations in Eqs.(10) using a Gaussian elimination algorithm.

No approximations have been made yet. The solution scheme allows calculating the Taylor series coefficients of e(x) f (x), g(x), h(x) and the auxiliary functions up to very high orders. The calculated finite Taylor polynomials are truncated sums of the exact (infinite) series and are the only approximation made. The radii of convergence for functions e(x), f (x), g(x) and h(x) are important, as they indicate the maximum lens apertures that can be achieved. Taylor's remainder theorem provides quantitative estimates for the approximation error but it can be also verified directly via ray tracing simulations. The solution scheme does not allow determining a priori for which initial values simultaneous solutions in x and y do exist and also converge well. The ray tracing results, however, illustrate that such solutions exist.

Example 2

Turning now to the exemplary embodiment of Fig.6A, an optical zoom system is considered including a plurality of optical elements (in this case, three freeform lenses, two with one plane and one freeform surface, one with two freeform surfaces), movable along one axis common to the various optical elements. The surface shapes are selected to generate an afocal zoom system capable of providing squared flat-top output energy distributions of variable size for the given input Gaussian beam. Such an optical performance can be already achieved using known system solutions. First, a beam shaping system (two groups of lenses) is used to shape a rectangular square from a Gaussian beam. As second sub-system, a common zoom beam expander (three groups of lenses) is used now to scale the size of the generated rectangular square throughout the zoom range. In contrast, the example presented here combines both functionalities in a single afocal zoom system, using less optical elements and, hence, providing a more compact optical system.

The three lens configurations shown in Figs. 6A '(Config1'), 7A ('Config2') and 8A ('Config3') are described by the distance d1 between the first and the second optical elements and the distance d2 between the second and third optical element, that fully determine the positions of all elements in each configuration.

|    | Config 1 | Config 2 | Config 3 |
|----|----------|----------|----------|
| d1 | 2.53E+01 | 3.23E+01 | 3.81E+01 |
| d2 | 2.09E+01 | 1.82E+01 | 1.70E+01 |

The mathematical surfaces can be described by surface functions of the type

$$z(x, y) = \sum_{i=1}^{N} a_{2i} x^{2i} + \sum_{i=1}^{N} a_{2i} y^{2i}$$

where z represents the surface sag distribution of the freeform surfaces with identical cross sections in the x-z and y-z planes. The optical design process starts from the XY-zoom beam expander design concept explained before, that has variable but common magnification ratios both in x and y direction. The designed system magnifies the input beam by a factor of 1x, 2x and 3x both in x and y for three configurations. From this starting point the final system has been optimized to allow both magnification and shaping of the Gaussian to a variable size square flat-top distribution. For this example the first 6 coefficients of the freeform surfaces (i.e. surfaces 2, 3, 4 and 5 in Fig.6A) are given as

| Surface | a2 | a4 | a6 | a8 | a10 | a12 |
|---|---|---|---|---|---|---|
| 2 | -0.021 | -1.21E-04 | 8.29E-06 | -3.62E-07 | 1.03E-08 | -1.33E-10 |
| 3 | -0.182 | 3.20E-02 | -1.69E-03 | -1.00E-03 | 2.11E-04 | -1.13E-05 |
| 4 | 0.128 | -3.90E-02 | 9.58E-03 | -8.93E-05 | -2.95E-04 | 3.15E-05 |
| 5 | 0.042 | -3.27E-04 | 1.81E-05 | -1.34E-06 | 4.05E-08 | -4.17E-10 |

Fig.6B, 7B and 8B illustrate the respective corresponding intensity distributions.

Example 3

As a numerical illustration of the zoom system shown in Fig.9, an exemplary configuration (in this example two lenses, where each lens has one plane and one shaped optical surface) is considered that generates the output beam as a rectangular (here squared) shaped flat-top (here: flattened-Lorentzian) energy distribution at the target plane with variable side lengths that is changed by moving the lenses. The aspect ratio of the rectangular/squared output energy distribution remains constant throughout the zoom range. Fig.10 illustrates the intensity distribution corresponding to Fig.9. Fig.11 and Fig.12 show two other positions of the optical elements. The three lens configurations shown in Fig.9 ('Config1'), 11 ('Config2') and 12 ('Config3') are described by the distance d1 between the two optical elements and the distance d2 between the second optical element and the plane D. These two values provide the positions of all elements in each configuration. For example :

| | Config 1 | Config 2 | Config 3 |
|---|---|---|---|
| d1 | 2.96E+01 | 3.92E+01 | 5.00E+01 |
| d2 | 6.00E+01 | 3.95E+01 | 1.51E+01 |

Fig.11B and 12B show the intensity distribution corresponding to the positions of Fig.11A and 12A with a side length of 8 and 4mm, respectively, in plane D.
Mathematically, this example can be described by surface functions of the form

$$z(x,y) = \sum_{i=1}^{N} a_{2i} x^{2i} + \sum_{i=1}^{N} a_{2i} y^{2i}$$

where z represents the surface sag distribution of the freeform surfaces with identical cross sections in the x-z and y-z planes. The optical design process starts from a modified mathematical description as illustrated for the XY-beam expander in a simpler description due to symmetry (same coefficients for x and y) and only two surfaces are shaped. The initially designed system magnifies the input beam by a factor of 1x, 2x and 3x both in x and y for three configurations. From this starting point the final system has been optimized to allow both magnification and shaping of the Gaussian to a variable size square flat-top distribution.
For the shown example the first 6 coefficients of the two freeform surfaces 1 and 4 can be determined as

| Surf # | a2 | a4 | a6 | a8 | a10 | a12 |
|---|---|---|---|---|---|---|
| 1 | 6.06E-03 | 3.57E-04 | -1.10E-05 | -7.33E-08 | 1.77E-08 | -4.01E-10 |
| 4 | 0.078 | -4.80E-03 | 2.13E-04 | 1.26E-05 | -1.76E-06 | 4.00E-08 |

Example 4

For another exemplary configuration the same zoom system is taken but now arranged in an off-axis configuration, meaning that the target plane D is tilted with respect to the axis of the lenses' movements. See Fig. 13A and 13B for a cross-section in the x-z and the y-z plane of the optical zoom system. In this example, plane D is rotated by 45° about the x-axis. Note that compared to the previous example, the only difference is the rotated plane D. It is further to be noted that also in case an optical zoom system with either rotational or cylindrical symmetry is considered, freeform surfaces are needed to achieve the equivalent irradiance distributions over the zoom range, if the target plane D is tilted with respect to the optical axis of the zoom system. For example, a rotationally symmetric zoom system that generates a rotationally symmetric spot with certain shape and variable size at plane D, needs to become freeform in order to maintain the spot shapes and sizes throughout the zoom range if plane D is tilted.

The output is a rectangular (here squared) shaped flat-top (here: flattened-Lorentzian) energy distribution at the target plane with variable side lengths that is changed by moving the lenses. The aspect ratio of the rectangular/squared output energy distribution remains constant throughout the zoom range. The three lens configurations shown in Figs.13 ('Config 1'), 14 ('Config 2') and 15 ('Config 3') are described by the distance d1 between the two optical elements and the distance d2 between the second optical element and the plane D, that provide the positions of all elements in each configuration.

|    | Config 1 | Config 2 | Config 3 |
|----|----------|----------|----------|
| d1 | 4.00E+01 | 4.39E+01 | 5.00E+01 |
| d2 | 1.00E+02 | 7.13E+01 | 4.01E+01 |

Mathematically, this example can be described by surface functions of the form

$$z(x,y) = \sum_{i=1}^{N} a_{2i} x^{2i} + \sum_{i=1}^{N} b_{2i} y^{2i} + \sum_{i=0}^{N} \sum_{j=1}^{N} c_{i\_j} x^{2i} y^{2j-1}$$

where z represents the surface sag distribution of the freeform surfaces with plane mirror symmetry with respect to the y-z plane (only even terms in x). The third double sum contains odd terms in y.

As a starting point, the on-axis solution from the previous example has been taken. In a first step, plane D has been tilted by 20° and the surfaces have been optimized, now allowing different even order coefficients in x and y direction (only the first two sums in z(x,y)), the positions of the lenses has been kept fix. Next, all coefficients in z(x,y) (including the mixed terms) have been optimized, and once more, now with the final 45° tilt angle. In the final optimization step, all coefficients and the lens positions have been allowed to vary to obtain the final result. For this example the coefficients of the two surfaces 1 and 4 are computed :

| Surf # | a2    | a4       | a6        | a8        | a10       | a12      |
|--------|-------|----------|-----------|-----------|-----------|----------|
| 1      | 0.011 | 2.10E-04 | -1.56E-05 | 8.59E-07  | -2.87E-08 | 4.16E-10 |
| 4      | 0.102 | -1.10E-02| -2.62E-03 | 3.08E-03  | -9.92E-04 | 1.17E-04 |

| Surf # | b2    | b4       | b6        | b8        | b10       | b12      |
|--------|-------|----------|-----------|-----------|-----------|----------|
| 1      | 0.011 | 1.62E-04 | -9.89E-06 | 4.25E-07  | -1.15E-08 | 1.43E-10 |
| 4      | 0.077 | -5.78E-03| -3.81E-03 | 3.37E-03  | -1.08E-03 | 1.29E-04 |

| Surf # | c0_1     | c0_2      | c0_3     | c0_4      | c0_5     |
|--------|----------|-----------|----------|-----------|----------|
| 1      | 1.76E-03 | -8.24E-05 | 3.79E-06 | -1.35E-07 | 2.33E-09 |
| 4      | 0.012    | -8.17E-03 | 3.47E-03 | -8.15E-04 | 7.92E-05 |

| Surf # | c1_1      | c2_1     | c1_2     | c3_1      | c2_2      | c1_3      |
|--------|-----------|----------|----------|-----------|-----------|-----------|
| 1      | -7.24E-05 | 2.57E-06 | 6.59E-06 | -9.43E-08 | -2.46E-07 | -2.09E-07 |
| 4      | -6.31E-03 | 1.04E-03 | 4.00E-03 | 1.25E-04  | -8.97E-04 | -1.17E-03 |

| Surf # | c4_1     | c3_2     | c2_3     | c1_4     |
|--------|----------|----------|----------|----------|
| 1      | 1.83E-09 | 3.60E-09 | 4.43E-09 | 2.04E-09 |
| 4      | -6.22E-05| 8.23E-05 | 1.34E-04 | 1.25E-04 |

Example 5

As another example a system is considered where the output is a rectangular shaped flat-top (here: flattened-Lorentzian) energy distribution at the target plane with variable aspect ratio that is changed by moving the lenses. Fig. 16A and 16B illustrate the cross-sections in the x-z and the y-z plane of the optical zoom system. Again three configurations 'Config1', 'Config2', 'Config3' are taken. Figs. 17 and 18 show the cross-sections in the x-z and the y-z plane of the latter two. The three lens configurations shown in Figs. 16, 17 and 18 are again described by the distances d1 between the two optical elements and d2 between the second optical element and the plane D.

|    | Config 1  | Config 2  | Config 3  |
|----|-----------|-----------|-----------|
| d1 | 4.38E+01  | 6.77E+01  | 4.46E+01  |
| d2 | 6.11E+01  | 1.51E+01  | 3.05E+01  |

The mathematical representation now is

$$(x, y) = \sum_{i=1}^{N} a_{2i} x^{2i} + \sum_{i=1}^{N} b_{2i} y^{2i}$$

where z represents the surface sag of the freeform surfaces with different cross sections in the x-z and y-z plane, respectively. The optical design process starts from a modified mathematical description as illustrated for the XY-beam expander in a simpler description due to the fact that only two surfaces are shaped. The initially designed system magnifies the input beam by a factor of 0.5x/2x, 2x/0.5x and 1x/1x in x/y for the three configurations. From this starting point the final system has been optimized to allow both magnification and shaping of the Gaussian to a variable size square flat-top distribution.
For this example the first 12 coefficients of the two optical surfaces 1 and 4 are given as

| Surface | a2     | b2       | a4       | b4        | a6        | b6        |
|---------|--------|----------|----------|-----------|-----------|-----------|
| 1       | -0.041 | 1.04E-03 | 4.14E-03 | 5.52E-04  | -3.64E-04 | -3.34E-05 |
| 4       | -0.022 | 0.044    | 6.14E-05 | -1.08E-03 | -9.64E-07 | -1.18E-04 |

| Surface | a8       | b8       | a10       | b10       | a12       | b12       |
|---------|----------|----------|-----------|-----------|-----------|-----------|
| 1       | 2.20E-05 | 1.57E-06 | -7.57E-07 | -4.76E-08 | 1.10E-08  | 6.57E-10  |
| 4       | 1.28E-07 | 1.53E-05 | -4.68E-10 | 2.55E-07  | -3.88E-11 | -7.08E-08 |

Fig.16C, 17C and 18C illustrate the respective corresponding intensity distributions.
While the invention has been illustrated and described in detail in the drawings and foregoing description, such illustration and description are to be considered illustrative or exemplary and not restrictive. The foregoing description details certain embodiments of the invention. It will be appreciated, however, that no matter how detailed the foregoing appears in text, the invention may be practiced in many ways. The invention is not limited to the disclosed embodiments.
Other variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality. A single processor or other unit may fulfil the functions of several items recited in the claims. The mere fact that certain measures are recited in mutually different dependent claims does not indicate that a combination of these measures cannot be used to advantage. A computer program may be stored/distributed on a suitable medium, such as an optical storage medium or a solid-state medium supplied together with or as part of other hardware, but may also be distributed in other forms, such as via the Internet or other wired or wireless telecommunication systems. Any reference signs in the claims should not be construed as limiting the scope.

**Claims**

1. Optical system arranged for receiving light and comprising

   - a zoom lens system with at least two lenses,
   - means for moving said at least two lenses with respect to one another in a given direction so that at least one energy or irradiance output distribution of the received light can be generated,

   whereby at least one of said lenses has at least one freeform shaped optical surface.

**2.** Optical system as in claim 1, wherein said at least one freeform shaped optical surface has symmetry imposed by one or more symmetry properties of said at least one energy or irradiance output distribution, of an energy or irradiance input distribution of the received light or of both.

**3.** Optical system as in claim 2, wherein said symmetry is mirror symmetry or n-fold rotational symmetry.

**4.** Optical system as in any of the previous claims, wherein said energy or irradiance output distribution is fixed and the received light has a variable energy or irradiance input distribution.

**6.** Optical system as in any of claims 1 to 4, said energy or irradiance output distribution is variable and the received light has a fixed energy or irradiance input distribution.

**7.** Optical system as in any of the previous claims, wherein said means for moving said at least two lenses is stepper motor or a MEMS device.

**8.** Optical system as in any of the previous claims, wherein said given direction is a common axis of said at least two lenses.

**9.** Optical system as in any of claims 1 to 8, wherein said energy or irradiance output distribution is generated in a reference surface.

**10.** Optical system as in claim 9, wherein said reference surface is tilted with respect to said given direction.

**11.** Optical system as in any of claims 1 to 8, wherein said zoom lens system comprises at least three lenses.

**12.** Optical system as in claim 11, being an afocal zoom system.

**13.** Optical zoom system as in any of the previous claims, comprising a light source.

**14.** Optical system as in any of the previous claims, arranged for generating different variable magnifications in x and y direction.

**15.** Optical system as in any of the previous claims, comprising at least one diffractive optical element or phase element.

(a) 1x

Lens movement

(b) 2x

(c) 3x

r

z

**Fig. 1**

1st surface
(flat)

3rd surface  5th surface

(a)

x

z     2nd surface

4th surface

6th surface
(flat)

reference
plane

(b)

y

z

**Fig. 2A/2B**

9.78E-003

8.81E-003

7.83E-003

6.85E-003

5.87E-003

4.89E-003

3.91E-003

2.94E-003

1.96E-003

9.78E-004

0.00E+000

**Fig. 2C**

1st surface (flat)

3rd surface

5th surface

(a)

x

z

2nd surface

4th surface

6th surface (flat)

reference plane

(b)

y

z

**Fig. 3A/3B**

EP 3 147 697 A1

9.59E-003
8.64E-003
7.68E-003
6.72E-003
5.76E-003
4.80E-003
3.84E-003
2.88E-003
1.92E-003
9.59E-004
0.00E+000

**Fig. 3C**

1st surface (flat)  3rd surface          5th surface

(a)

x

2nd surface  4th surface     6th surface (flat)  reference plane

(b)

y

**Fig. 4A/4B**

17

**Fig. 4C**

**Fig. 5**

**Fig. 6A**

**Fig. 6B**

1st surface
(flat)

3rd surface

5th surface

(a)

x&y

z

2nd surface

4th surface

6th surface
(flat)

reference
plane

**Fig. 7A**

0.0185

0.0166

0.0148

0.0129

0.0111

0.0092

0.0074

0.0055

0.0037

0.0018

0.0000

**Fig. 7B**

1st surface
(flat)

3rd surface

5th surface

(a)

x&y

z

2nd surface

4th surface

6th surface
(flat)

reference
plane

**Fig. 8A**

0.0623
0.0561
0.0499
0.0436
0.0374
0.0312
0.0249
0.0187
0.0125
0.0062
0.0000

**Fig. 8B**

1st surface      4th surface

(a)

x&y

z

2nd surface
(flat)

3rd surface
(flat)

plane D

**Fig. 9**

7.99E-003

7.20E-003

6.40E-003

5.60E-003

4.80E-003

4.00E-003

3.20E-003

2.40E-003

1.60E-003

7.99E-004

0.00E+000

**Fig. 10**

1st surface      4th surface

(a)

x&y

2nd surface
(flat)

3rd surface
(flat)

plane D

**Fig. 11A**

0.0173
0.0156
0.0138
0.0121
0.0104
0.0086
0.0069
0.0052
0.0035
0.0017
0.0000

**Fig. 11B**

**Fig. 12A**

**Fig. 12B**

1st surface

4th surface

tilted by 45°
about x-axis

(a)

x

z

2nd surface
(flat)

3rd surface
(flat)

plane D

(b)

y

z

**Fig. 13A/13B**

8.96E-003

8.06E-003

7.17E-003

6.27E-003

5.38E-003

4.48E-003

3.58E-003

2.69E-003

1.79E-003

8.96E-004

0.00E+000

**Fig. 13C**

**Fig. 14A/14B**

**Fig. 14C**

**Fig. 15A/15B**

| |
|---|
| 0.0687 |
| 0.0619 |
| 0.0550 |
| 0.0481 |
| 0.0412 |
| 0.0344 |
| 0.0275 |
| 0.0206 |
| 0.0137 |
| 0.0069 |
| 0.0000 |

**Fig. 15C**

**Fig. 16A/16B**

| | |
|---|---|
| | 0.0241 |
| | 0.0217 |
| | 0.0193 |
| | 0.0169 |
| | 0.0145 |
| | 0.0121 |
| | 0.0097 |
| | 0.0072 |
| | 0.0048 |
| | 0.0024 |
| | 0.0000 |

**Fig. 16C**

**Fig. 17A/17B**

0.0239
0.0215
0.0191
0.0167
0.0144
0.0120
0.0096
0.0072
0.0048
0.0024
0.0000

**Fig. 17C**

(a)

1st surface

4th surface

x

z

2nd surface
(flat)

3rd surface
(flat)

plane D

(b)

y

z

**Fig. 18A/18B**

| 0.0241 |
| 0.0217 |
| 0.0193 |
| 0.0169 |
| 0.0145 |
| 0.0121 |
| 0.0097 |
| 0.0072 |
| 0.0048 |
| 0.0024 |
| 0.0000 |

**Fig. 18C**

30

Europäisches
Patentamt

European
Patent Office

Office européen
des brevets

# EUROPEAN SEARCH REPORT

Application Number

EP 15 18 6595

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 2004 037754 A (MINOLTA CO LTD) 5 February 2004 (2004-02-05) * figure 1 * * paragraphs [0024], [0011] * | 1-14 | INV. G02B13/12 G02B27/09 ADD. B23K26/21 B29C65/16 |
| X | WO 2013/065391 A1 (KONICA MINOLTA INC [JP]; YAMADA KEIKO [JP]; KONNO KENJI [JP]; MATSUSAK) 10 May 2013 (2013-05-10) * figure 1 * * paragraph [0057] * * paragraph [0002] * * figures 11A-C * * paragraph [0001] * | 1-10, 12-14 | |
| A | YEH M-S ET AL: "FIRST-ORDER ANALYSIS OF A THREE-LENS AFOCAL ZOOM SYSTEM", OPTICAL ENGINEERING, SOC. OF PHOTO-OPTICAL INSTRUMENTATION ENGINEERS, BELLINGHAM, vol. 36, no. 4, 1 April 1997 (1997-04-01), pages 1249-1258, XP000700939, ISSN: 0091-3286, DOI: 10.1117/1.601245 * figure 1 * | 1-14 | |
| A | US 6 201 229 B1 (TAWA FUMIHIRO [JP] ET AL) 13 March 2001 (2001-03-13) * figure 1 * | 14 | TECHNICAL FIELDS SEARCHED (IPC) G02B B29C B23K |

-/--

The present search report has been drawn up for all claims

| Place of search | Date of completion of the search | Examiner |
|---|---|---|
| Munich | 29 February 2016 | Linke, Felix |

EPO FORM 1503 03.82 (P04C01)

Europäisches
Patentamt

European
Patent Office

Office européen
des brevets

# EUROPEAN SEARCH REPORT

Application Number

EP 15 18 6595

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | GEORG NADORFF ET AL: "Variable xy-UV beam expander for high-power laser beam shaping", MEDICAL IMAGING 2002: PACS AND INTEGRATED MEDICAL INFORMATION SYSTEMS: DESIGN AND EVALUATION, vol. 8490, 15 October 2012 (2012-10-15), page 84900I, XP055253345, 1000 20th St. Bellingham WA 98225-6705 USA ISSN: 0277-786X, DOI: 10.1117/12.929744 ISBN: 978-1-5106-0167-3 * figure 2 * | 1-14 | |
| A | US 5 121 160 A (SANO NAOTO [JP] ET AL) 9 June 1992 (1992-06-09) * figure 5 * | 1-14 | |

TECHNICAL FIELDS
SEARCHED (IPC)

The present search report has been drawn up for all claims

| Place of search | Date of completion of the search | Examiner |
|---|---|---|
| Munich | 29 February 2016 | Linke, Felix |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 15 18 6595

This annex lists the patent family members relating to the patent documents cited in the above-mentioned European search report.
The members are as contained in the European Patent Office EDP file on
The European Patent Office is in no way liable for these particulars which are merely given for the purpose of information.

29-02-2016

| Patent document cited in search report | | Publication date | Patent family member(s) | | Publication date |
|---|---|---|---|---|---|
| JP 2004037754 | A | 05-02-2004 | NONE | | |
| WO 2013065391 | A1 | 10-05-2013 | JP | 5821968 B2 | 24-11-2015 |
| | | | JP | WO2013065391 A1 | 02-04-2015 |
| | | | WO | 2013065391 A1 | 10-05-2013 |
| US 6201229 | B1 | 13-03-2001 | FR | 2775794 A1 | 10-09-1999 |
| | | | JP | 3614294 B2 | 26-01-2005 |
| | | | JP | H11258544 A | 24-09-1999 |
| | | | US | 6201229 B1 | 13-03-2001 |
| US 5121160 | A | 09-06-1992 | NONE | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5543963 A
- US 5095386 A

- US 5864430 A

**Non-patent literature cited in the description**

- **G. NADORFF et al.** Variable xy-UV beam expander for high-power laser beam shaping. *Proc.SPIE,* 2012, vol. 8490, 84900I